# EUROPÄISCHE PATENTSCHRIFT

(11) **EP 1 106 049 B1**
(45) Veröffentlichungstag und Bekanntmachung des Hinweises auf die Patenterteilung: **08.03.2006**
(21) Anmeldenummer: 00126363.1
(22) Anmeldetag: 02.12.2000
(51) Int. Cl.: A01D 45/02

(54) **Einzugs- und Pflückeinrichtung mit Häckseleinrichtung**
Corn gathering and picking device with a chopping device
Dispositif d'introduction et de cueillage avec un dispositif de hachage

(30) Priorität: 09.12.1999 DE 19959282
(43) Veröffentlichungstag der Anmeldung: 13.06.2001
(73) Patentinhaber: Maschinenfabrik Kemper GmbH & Co. KG, 48703 Stadtlohn (DE)
(72) Erfinder: Wolters, Norbert, 48712 Gescher (DE); Wuebbels, Richard, 46414 Rhede (DE)
(74) Vertreter: Holst, Sönke

(56) Entgegenhaltungen:
- DE-A- 2 549 136
- DE-A- 19 734 747
- FR-A- 2 599 931
- US-A- 5 787 696

## Beschreibung

Die Erfindung betrifft eine Einzugs- und Pflückeinrichtung mit einem reihenunabhängig arbeitenden Einzugselement, das sich um eine etwa vertikale Achse dreht, zum Erfassen von Teilen, insbesondere Stängeln, von Pflanzen eingerichtet ist, und die Pflanzen einer Pflückeinrichtung zuführt, die Teile von ihnen abtrennt und mit einer Häckseleinrichtung, die zum Zerteilen der Reste der Pflanze eingerichtet ist und ein Häckselmesser umfasst, welches um eine wenigstens näherungsweise vertikal verlaufende Achse rotiert.

Ein reihenabhängiger Maispflücker ist beispielsweise aus der US 5 787 696 A oder der FR 2 599 931 A bekannt. Er ist mit mehreren parallelen Einzugskanälen versehen, die etwa horizontal und in Vorwärtsfahrtrichtung verlaufen, und an deren zwei Seitenrändern an umlaufenden Ketten befestigte Mitnehmer die zu erntenden Pflanzenstängel einziehen. Die Pflanzenstängel werden von horizontalen und beidseits der Einzugskanäle angeordneten, gegensinnig rotierenden Pflückwalzen erfasst und eingezogen, wobei die Maiskolben einen zwischen zwei Deckplatten gebildeten Spalt nicht passieren können, so dass sie daran hängen bleiben und mittels einer Schnecke zur weiteren Verarbeitung in einen Mähdrescher abtransportiert werden. Die Pflanzenstängel hingegen werden von den Pflückwalzen vollständig eingezogen und auf dem Feldboden abgelegt. Bei der FR 2 599 931 A werden die Pflanzenstängel durch ein unterhalb der Pflückwalzen rotierendes Messer zerhackt, während die Pflückwalzen in der US 5 787 696 A Schlagplatten aufweisen, die mit senkrecht zur Achse der Pflückwalzen feststehenden Messern zusammenwirken, um die abgepflückten Pflanzen zu zerstückeln. Bei diesen bekannten Maispflückern ist als nachteilig anzusehen, dass sie nur Pflanzen erfassen können, die in der Nähe des Einzugskanals stehen. Deshalb muss der Querabstand der Einzugskanäle relativ genau dem Pflanzenreihenabstand entsprechen und das Erntefahrzeug exakt gelenkt werden. Außerdem sind die Ketten relativ verschleißanfällig.

Ein Maispflücker mit mehreren hintereinander angeordneten kleineren Rotoren, die die Pflanzen sukzessive entlang des Pflückspalts fördern, ist in der US 5 916 113 A beschrieben. Dort ist aber kein Häcksler für die Stängel vorgesehen.

In der DE 197 34 747 A wird ein Maisernte-Vorsatzgerät zum Anbau an eine selbstfahrende Erntemaschine beschrieben, das reihenunabhängig mähen und die Maiskolben von den Pflanzen pflücken kann, um sie gesondert vom Rest der Pflanzen zu verarbeiten, beispielsweise auszudreschen. Das Gerät weist zum reihenunabhängigen Erfassen und Abmähen der Pflanzen ein Mähwerk mit einer um die Hochachse rotierenden, am Außenumfang mit Aussparungen versehenen Trommel und einem darunter rotierenden Messer auf, wie es von Maisgebissen her bekannt ist. Die Pflanzen werden dann stromab des Mähwerks angebrachten konventionellen Pflückaggregaten zugeführt, wie sie in der DE 30 29 424 A beschrieben sind. Die Pflückwalzen können Schlagplatten aufweisen, die mit senkrecht zur Achse der Pflückwalzen feststehenden Messern zusammenwirken, um die abgepflückten Pflanzen zu zerstückeln. Es können aber auch unter den Pflückaggregaten Zerkleinerungseinrichtungen für die durch den Pflückspalt durchgezogenen kolbenlosen Maispflanzen vorgesehen sein.

Als nachteilig ist bei dem aus der DE 197 34 747 A bekannten Maispflücker anzusehen, dass die Häckseleinrichtung und die Pflückeinrichtung der Einzugseinrichtung nachgeordnet sind. Die Baulänge ist also relativ groß.

Die der Erfindung zugrunde liegende Aufgabe wird darin gesehen, eine reihenunabhängig arbeitende Einzugs- und Pflückeinrichtung bereitzustellen, die sich durch eine kompakte Bauweise auszeichnet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Einzugs- und Pflückeinrichtung weist ein Einzugselement auf, das die Pflanzen erfasst und der Pflückeinrichtung zuführt. Das Einzugselement operiert reihenunabhängig, ist also eingerichtet, über eine relativ große seitliche Arbeitsbreite Pflanzen einzuziehen. Die Pflückeinrichtung entfernt die Nutzteile der Pflanze, wie Maiskolben, und führt die Reste der Pflanze der Häckseleinrichtung zu. Die Reste der Pflanze werden dann von der Häckseleinrichtung zerkleinert, die sich stromab - in der Regel unterhalb - der Pflückeinrichtung befindet. Die Häckseleinrichtung ist mit einem Häckselmesser ausgestattet, dessen Drehachse zumindest näherungsweise parallel zur Drehachse eines Einzugselements verläuft. Diese Drehachsen sind zumindest näherungsweise vertikal orientiert. Der Kerngedanke der Erfindung besteht darin, die Wirkungsbereiche von Häckseleinrichtung und Einzugseinrichtung einander überdeckend zu gestalten. Die Häckseleinrichtung weist daher einen Wirkungskreis auf, der den des Einzugselements schneidet. Dieses Merkmal bietet eine Reihe an Vorteilen, die weiter unten näher erläutert werden: Zunächst ist ein kompakter Aufbau des Geräts gewährleistet. Außerdem können die Häckseleinrichtung und das Einzugselement beim Häckseln derart zusammenwirken, dass letzteres als Gegenmesser wirkt. Alternativ oder zusätzlich kann das Häckselmesser auch als Mähmesser wirken.

In einer bevorzugten Ausführungsform der Erfindung dient das Einzugselement beim Zerteilen der Pflanze als Gegenmesser. In dieser Ausführungsform ist das Einzugselement in der Regel unterhalb der Häckseleinrichtung angeordnet. Es hält und stützt die Pflanze zumindest beim ersten Schnitt ab, und in der Regel auch bei nachfolgenden Schnittvorgängen, da die Pflanze von der Pflückeinrichtung nachgeschoben wird, und wieder am Einzugselement zum Anliegen kommt, falls sie nicht schon zuvor von der Häckseleinrichtung zertrennt wird. Da die Pflanze sukzessive vorangeschoben wird, wenn sie sich in der Pflückeinrichtung befindet, und von ihr festgehalten wird, wirkt die Häckseleinrichtung in der Regel auch mit der Pflückeinrichtung zusammen. Auf diese Weise erhält man eine Einzugs- und Pflückeinrichtung, die sich durch ein verbessertes Häckselverhalten auszeichnet.

Bezüglich der Positionierung der Häckseleinrichtung sind mehrere Alternativen denkbar:

Zum einen kann die Häckseleinrichtung einen Wirkungsbereich haben, der sich über die Länge der Pflückeinrichtung erstreckt. Die Pflanze wird somit in an sich bekannter Weise sukzessive von Pflückwalzen der Pflückeinrichtung in der Regel nach unten eingezogen und, nachdem sie die Pflückeinrichtung wieder verlassen hat, von der Häckseleinrichtung zerteilt. Der Vorzug besteht in der im wesentlichen konstanten Länge der gehäckselten Pflanzenteile, die durch den kontinuierlichen Vortrieb der Pflückwalzen erzielt wird.

Zum anderen ist in einer besonders vorteilhaften Ausführungsform der Erfindung die Häckseleinrichtung derart angeordnet, dass die Pflanze, bereits kurz nachdem das Einzugselement sie erfaßt hat (oder auch schon vorher), vom Erdboden abgetrennt wird. Der Wirkungsbereich der Häckseleinrichtung erstreckt sich somit auf einen stromauf der Pflückeinrichtung liegenden Bereich, und kann eine relativ große Breite umfassen. Bei nachfolgenden Fördervorgängen kann die Pflanze in beliebige Richtungen transportiert werden, ohne dass die oberen Teile der Pflanze relativ zu ihrer Wurzel zu verbiegen wären. Ein Umfallen der Pflanze ist aufgrund der Trägheit ihrer Masse nicht zu befürchten, sofern die weitere Verarbeitung in der Einzugs- und Pflückeinrichtung hinreichend schnell erfolgt. Die Häckseleinrichtung wirkt daher (auch) auf Pflanzen ein, die sich noch nicht in der Pflückeinrichtung, sondern stromauf von ihr befinden. Sie trennt sie vom Boden ab und anschließend werden weitere Teile der Pflanze abgetrennt, da letztere durch die Schwerkraft nach unten fällt, wenn sie nicht in irgendeiner Weise abgestützt wird.

Ist die Häckseleinrichtung mit einem Einzugselement der Einzugseinrichtung (zumindest näherungsweise) koaxial angeordnet, erreicht man auf einfache Weise, dass die Pflanze bereits stromauf der Pflückeinrichtung von der Häckseleinrichtung bearbeitet wird. Die Häckseleinrichtung kann auch auf einer gedachten Geraden liegen, die parallel zur Vorwärtsbewegungsrichtung verläuft und die Drehachse der Einzugseinrichtung schneidet, jedoch gegenüber der Drehachse nach hinten oder vorn versetzt sein.

Alternativ dazu kann die Häckseleinrichtung nur im Endbereich der Pflückeinrichtung auf die Pflanze einwirken, also am bezüglich der Vorwärtsbewegungsrichtung der Einzugs- und Pflückeinrichtung am hinteren Ende der Pflückeinrichtung angeordnet sein. Die Pflanze bleibt also, während sie die Länge der Pflückeinrichtung durchläuft, zunächst intakt, und wird erst dann von der Häckseleinrichtung bearbeitet, wenn sie das hintere Ende der Pflückeinrichtung erreicht hat. Ein Vorteil besteht darin, dass die - noch intakte, aber von Nutzteilen befreite - Pflanze durch das Einzugselement, das unterhalb der Pflückeinrichtung angeordnet ist, durch die Pflückeinrichtung vorgeschoben oder gezogen werden kann.

Weiterhin wird ein oberes Einzugselement vorgeschlagen, das oberhalb der Pflückeinrichtung angeordnet ist, und dazu dient, die Pflanze zu erfassen und der Pflückeinrichtung zuzuführen.

Außerdem kann ein unteres Einzugselement unterhalb der Häckseleinrichtung und des oberen Einzugselements angeordnet sein.

Wie bereits beschrieben, ist die Einzugseinrichtung mit mindestens einem Einzugselement ausgestattet, das die auf dem Feld stehenden Pflanzen reihenunabhängig erfaßt und der Pflückeinrichtung zuführt. Dabei können mehrere übereinander angeordnete Einzugselemente Verwendung finden. Die Häckseleinrichtung kann ein Häckselmesser umfassen, das unterhalb oder oberhalb eines (insbesondere unteren) Einzugselements angeordnet ist. Alternativ können zwei übereinander positionierte Häckselmesser Verwendung finden, von denen eines oberhalb und eines unterhalb des unteren Einzugselements angebracht ist.

Weiterhin ist vorgeschlagen, dass das Einzugselement (bzw. die Einzugselemente) erfaßte Pflanzen über die wirksame Länge der Pflückeinrichtung transportiert (bzw. transportieren). Man erreicht dadurch, dass die im Stande der Technik für diesen Zweck verwendeten Kettenförderer mit daran angebrachten Mitnehmern entfallen können, und erzielt einen kompakten Aufbau der Einzugs- und Pflückeinrichtung.

Als vorteilhaft hat sich ein Einzugselement der Einzugseinrichtung erwiesen, das eine vorlaufende Oberfläche mit abweisendem Förderverhalten und eine nachlaufende Oberfläche mit aggressivem Förderverhalten aufweist. Ein derartiges Förderverhalten kann durch nach außen weisende Finger des Einzugselements erzielt werden, die entgegen der Drehrichtung rücklaufend gekrümmt sind. Die vorlaufende Oberfläche mit abweisendem Förderverhalten sorgt dafür, dass mit ihr in Berührung tretende Pflanzenteile, insbesondere Stängel, nach außen gefördert werden. Sie kommen dann mit der nachlaufenden Oberfläche in Berührung, die sie nach innen einzieht. Die Stängel der Pflanze werden liegen daher an einer nachlaufenden Oberfläche des Einzugselements an und werden durch die schwerkraftbedingten Kippmomente transportiert, die bei Rotation des Einzugselements entstehen. Die Pflanzen werden daher in leicht geneigter, aber im wesentlichen aufrechter Stellung der Pflückeinrichtung zugeführt.

Die Häckseleinrichtung kann gleichsinnig oder gegensinnig mit Einzugselementen der Einzugseinrichtung rotieren. Die Drehrichtung wird in der Regel derart gewählt, dass die abgeschnittenen Pflanzenteile in der gewünschten Richtung fortfliegen, also beispielsweise entgegen der Vorwärtsbewegungsrichtung der Einzugs- und Pflückeinrichtung nach hinten, oder zur Seite.

Bezüglich der Ausführung des Häckselmessers der Häckseleinrichtung stehen verschiedene Möglichkeiten zur Verfügung. Das Häckselmesser kann einseitig sein, wobei nur die in Drehrichtung vorlaufende Kante des Messers scharf ist. Es können aber auch doppelseitige Häckselmesser Verwendung finden, die zum einen bei Verschleiß umgedreht werden können, so dass anschließend eine bisher unbenutzte, scharfe Kante mit den Pflanzen in Wechselwirkung tritt. Zum anderen können diese doppelseitigen Häckselmesser beim Reversieren Vorteile haben, da dann ihre Rückseite eventuell gestaute Pflanzen zerschneidet, und eine Rückwärtsdrehung des Häckselmessers erst ermöglicht.

Außerdem ist denkbar, die Häckselmesser starr zu befestigen, oder sie pendelnd aufzuhängen. Die zweite Alternative hat den Vorteil, dass durch eventuell eindringende Fremdkörper bedingte Beschädigungen weniger gravierend sind.

Das Häckselmesser kann einen hackenden oder ziehenden Schnitt ausführen. Der hackende Schnitt hat den Vorteil, dass die abgetrennten Teile der Pflanze beim Schnitt einen Impuls erfahren, der sie von der Häckseleinrichtung abtransportiert. Ein ziehender Schnitt verspricht andererseits glattere Schnittkanten. Die Drehachse des Häckselmessers kann leicht nach vorn geneigt sein.

Es ist denkbar, glatte Häckselmesser oder Spleißmesser zu verwenden, die eine geriffelte Schneidkante aufweisen.

Sollen die gehäckselten Reste der Pflanze auf dem Boden abgelegt und anschließend durch eine geeignete Maschine aufgenommen werden, bietet es sich an, sie in einem Schwad abzulegen. Dazu ist eine geeignete Führung vorgeschlagen, die die abgeschlagenen Teile der Pflanze erfaßt und in einem Schwad ablegt. Findet ein unterhalb der Häckseleinrichtung angeordnetes Einzugselement Verwendung, wird die Führung zweckmäßigerweise zwischen diesem und der Häckseleinrichung angebracht.

Die erfindungsgemäße Einzugs- und Pflückeinrichtung ist zur Verwendung in Erntegutbergungseinrichtungen vorgesehen. Eine derartige Erntegutbergungsvorrichtung, die auch als Maispflücker bezeichnet wird, dient zur Ernte von Gutarten, wie Mais und Sonnenblumen, deren Nutzteile von Pflanzenresten getrennt werden.

In den Zeichnungen sind nachfolgend näher beschriebene Ausführungsbeispiele der Erfindung dargestellt. Es zeigt:
- Fig. 1: eine Draufsicht auf eine Einzugs- und Pflückeinrichtung einer Erntegutbergungsvorrichtung;
- Fig. 2: eine Seitenansicht der Einzugs- und Pflückeinrichtung aus Figur 1;
- Fig. 3: eine Frontansicht der Einzugs- und Pflückeinrichtung aus Figur 1;
- Fig. 4: eine Draufsicht auf eine Erntegutbergungsvorrichtung mit mehreren Einzugs- und Pflückeinrichtungen;
- Fig. 5: eine Draufsicht auf eine andere Ausführungsform einer Erntegutbergungsvorrichtung;
- Fig. 6: eine andere Ausführungsform einer Einzugs- und Pflückeinrichtung in perspektivischer Ansicht;
- Fig. 7: eine weitere Erntegutbergungsvorrichtung mit mehreren Einzugs- und Pflückeinrichtungen, die den in Figur 6 dargestellten ähnlich sind;
- Fig. 8: eine Draufsicht auf eine andere Ausführungsform einer Erntegutbergungsvorrichtung;
- Fig. 9: eine Draufsicht auf eine weitere Ausführungsform einer Erntegutbergungsvorrichtung;
- Fig. 10: eine Draufsicht auf eine weitere Ausführungsform einer Erntegutbergungsvorrichtung;
- Fig. 11: eine Seitenansicht auf die Ausführungsform aus Figur 10;
- Fig. 12: eine Frontansicht der Ausführungsform nach Figur 10; und
- Fig. 13: eine perspektivische Ansicht der Ausführungsform nach Figur 10.

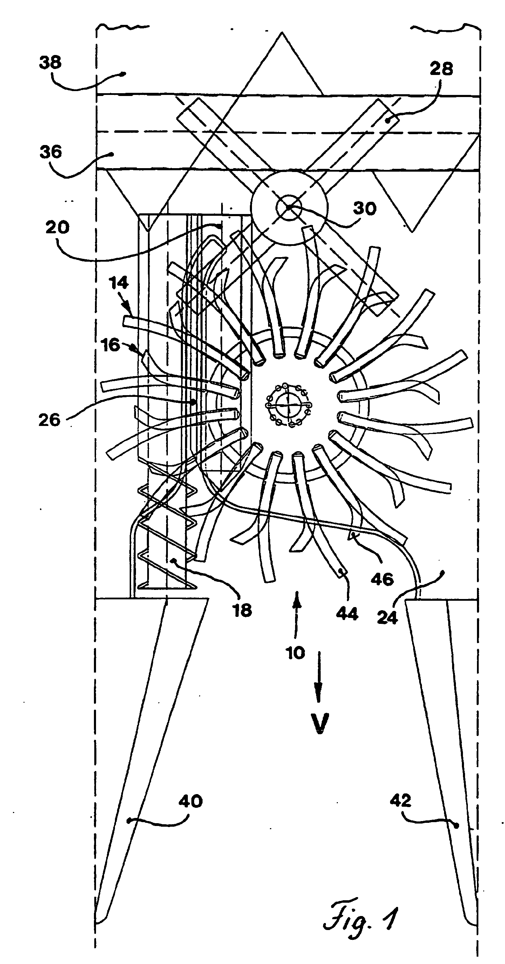

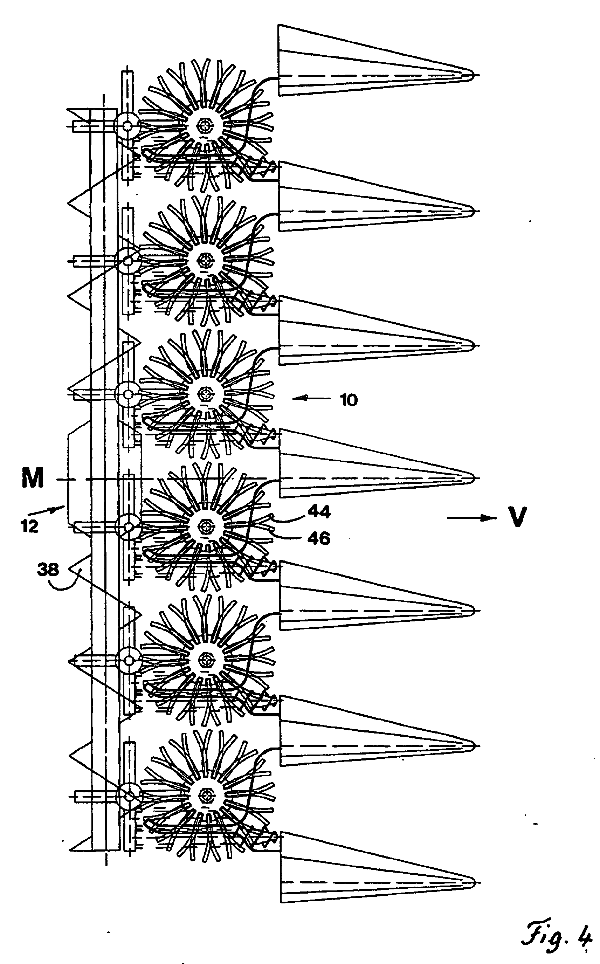

In Figur 1 ist eine Einzugs- und Pflückeinrichtung 10 einer Erntegutbergungsvorrichtung dargestellt. Eine vollständige Erntegutbergungvorrichtung 12, wie sie in Figur 4 dargestellt ist, weist in der Regel eine Mehrzahl von Einzugs- und Pflückeinrichtungen 10 auf, obwohl auch denkbar wäre, eine Erntegutbergungsvorrichtung 12 mit nur einer einzelnen Einzugs- und Pflückeinrichtung 10 zu versehen. Die Einzugs- und Pflückeinrichtung 10 besteht in ihrem grundsätzlichen Aufbau aus einem oberen Einzugselement 14 und einem unteren Einzugselement 16, die zum Erfassen und Einziehen der zu erntenden Pflanze dienen, sowie einem drehbaren Häckselmesser 28 und einer ersten Pflückwalze 18 und einer zweiten Pflückwalze 20, die unterhalb eines in einem Abstreifblech 24 eingebrachten Pflückkanals 26 angeordnet sind.

Das obere Einzugselement 14 und das untere Einzugselement 16 sind um eine vertikal verlaufende Achse drehbar angeordnet und werden durch einen - in den Zeichnungen nicht erkennbaren - Antrieb gleichsinnig in Rotation versetzt. Das obere Einzugselement 14 ist oberhalb des Abstreifblechs 24 angeordnet, während das untere Einzugselement 16 sich darunter befindet. Die Drehachsen des oberen Einzugselements 14 und des unteren Einzugselements 16 sind in den dargestellten Ausführungsformen parallel und koaxial, obwohl auch denkbar wäre, sie relativ zueinander versetzt und/oder geneigt anzuordnen. Die Drehachsen des unteren Einzugselements 16 und des oberen Einzugselements 16 verlaufen im wesentlichen vertikal, sie können aber auch leicht nach vorn geneigt sein. Die Drehrichtung des oberen Einzugselements 14 und des unteren Einzugselements 16 ist, in Figur 1 von oben betrachtet, im Uhrzeigerdrehsinn, wobei die Drehzahlen übereinstimmen. Das obere Einzugselement 14 besteht in seinem grundsätzlichen Aufbau aus einer zentralen Scheibe 48 mit über ihren Umfang verteilten, sich im wesentlichen radial erstreckenden Fingern 44, die in der Ebene der Scheibe 48 entgegen der Drehrichtung, also nachlaufend gekrümmt sind. Die Finger 44 haben daher ein abweisendes Förderverhalten. Alternativ oder zusätzlich zur Krümmung der Finger 44 wäre eine radiale Bewegung der Finger denkbar, wie sie von Schneidwerken her bekannt ist, und durch eine Exzentersteuerung erzielt werden kann, um ein abweisendes Förderverhalten zu erzielen. Das untere Einzugselement 16 ist ebenfalls aus einer zentralen Scheibe 50 mit über ihren Umfang verteilten, sich ebenfalls im wesentlichen radial erstreckenden Fingern 46 aufgebaut. Die Finger 46 des unteren Einzugselement 16 sind in der Ebene der Scheibe 50 in Drehrichtung voreilend gekrümmt. Das untere Einzugselement 16 hat somit ein aggressives Förderverhalten, es zieht also erfaßte Stängel (bezüglich der radialen Richtung) nach innen ein.

Wie anhand der in Figur 1 dargestellten Draufsicht auf die Einzugs- und Pflückeinrichtung 10 erkennbar ist, sind den Einzugselementen 14, 16 in Vorwärtsbewegungsrichtung V der Erntegutbergungsvorrichtung Stängelteiler 40, 42 vorgeordnet, die Pflanzen, welche nicht genau vor den Einzugselementen 14, 16 stehen, während der Vorwärtsbewegung jeweils nach innen drücken bzw. biegen, so dass sie in den Wirkbereich der Einzugselemente 14, 16 gelangen. Auch die in Vorwärtsbewegungsrichtung vorlaufende Kante des Abstreifblechs 24 ist derart gekrümmt, dass die Stängel der Pflanzen 22 in den Wirkbereich der Einzugselemente 14, 16 gedrückt werden. Der Wirkbereich der Einzugselemente 14, 16 wird durch die Länge der Finger 44, 46 definiert und ist derart groß, dass die Einzugs- und Pflückeinrichtung 10 - im Zusammenwirken mit der gekrümmten vorlaufenden Kante des Abstreifblechs 24 und den Stängelteilern 40, 42 - reihenunabhängig arbeitet.

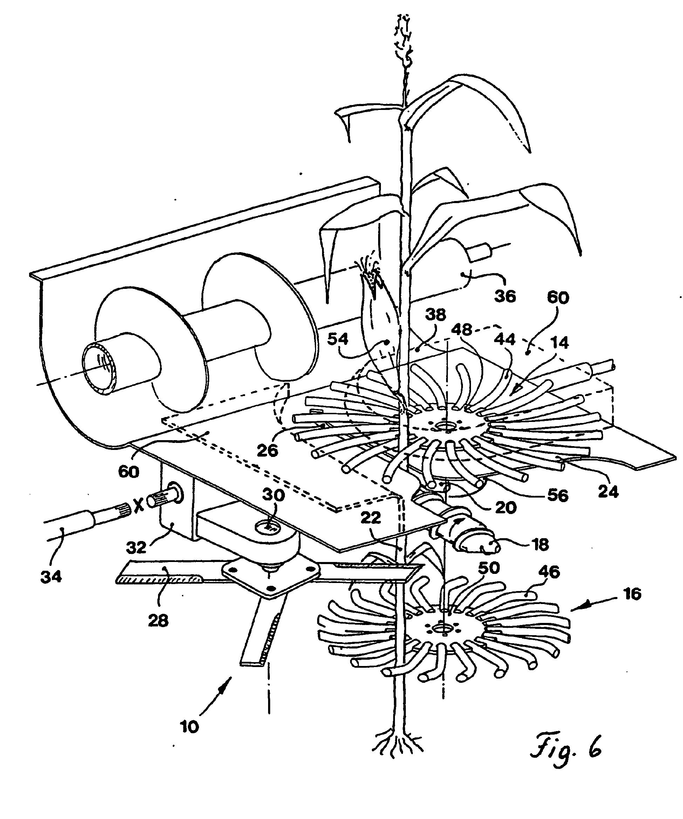

Anhand der Figur 1 ist die bereits oben beschriebene Wirkungsweise der Einzugselemente 14, 16 gut erkennbar. Ein Stängel einer auf dem Feld stehenden Pflanze 22 gerät - nachdem er (abhängig von seiner seitlichen Position) gegebenenfalls durch die Stängelteiler 40, 42 und/oder die vorlaufende Kante des Abstreifblechs 24 in Richtung auf die Mitte der Einzugs- und Pflückeinrichtung verbogen wurde - zuerst mit einem Finger 44 des oberen Einzugselements 14 in Berührung, da in der dargestellten Ausführungsform das obere Einzugselement 14 einen größeren Durchmesser als das untere Einzugselement 16 aufweist. (Es sind aber auch gleich lange Finger 44, 46 für das obere Einzugselement 14 und das untere Einzugselement 16 denkbar, wie sie in einigen der anderen dargestellten und später erläuterten Ausführungsformen verwendet werden.) Wegen der nachlaufenden, und daher abweisenden Krümmung des Fingers 44 wird der Stängel nach außen gedrückt, bis er die Spitze des Fingers 44 umrundet hat. Dann wird er von der vorlaufenden Oberfläche eines (in der Regel des nächsten, bei geringer Vortriebsgeschwindigkeit der Erntegutbergungsvorrichtung wäre aber auch denkbar, dass der Stängel noch die Spitze eines weiteren Fingers 44 des oberen Einzugselements 14 umläuft) nachfolgenden Fingers 46 des unteren Einzugselements 16 erfaßt, da sich inzwischen die Einzugs- und Pflückeinrichtung 10 mit den Einzugselementen 14, 16 in Vorwärtsbewegungsrichtung V vorbewegt hat. Der Stängel gleitet dann aufgrund der Drehung des Einzugselements 16 an der vorlaufenden Oberfläche des Fingers 46 nach innen. In seinem oberen Bereich wird der Stängel durch den Finger 46 des unteren Einzugselements 16 gegen die nachlaufende Oberfläche des in Drehrichtung dem jeweiligen Finger 46 vorlaufenden Fingers 44 des oberen Einzugselements 14 gedrückt, die ebenfalls aggressiv wirkt und den Stängel nach innen zieht. Dabei wird die noch nicht vom Boden des Feldes getrennte Pflanze 22 (s. Figur 6) ggf. verbogen. Jeweils ein Finger 46 des unteren Einzugselements 16 und ein Finger 44 des oberen Einzugselements 14 wirken somit zum Transport eines Stängels zusammen und bilden eine Art Zwickel, in dem der Stängel der Pflanze 22 transportiert wird.

Das mit dem oberen Einzugselement 14 zusammenwirkende untere Einzugselement 16 verbringt den Stängel der Pflanze 22 in den Wirkungsbereich der ersten Pflückwalze 18, die seitlich neben den Einzugselementen 14, 16 angeordnet und horizontal und parallel zur Vorwärtsbewegungsrichtung V orientiert ist. In vertikaler Richtung betrachtet, ist die erste Pflückwalze 18 zwischen dem Abstreifblech 24 und dem unteren Einzugselement 16 angeordnet. Der (bezüglich der Vorwärtsbewegungsrichtung V) vordere Bereich der ersten Pflückwalze 18 ist ein Schneckenförderer, der in Zusammenwirken mit den Einzugselementen 14, 16 den Stängel der Pflanze 22 in einen Pflückkanal 26 einzieht, welcher sich zumindest näherungsweise parallel zur Vorwärtsbewegungsrichtung V erstreckt und zwischen der ersten Pflückwalze 18 und den Einzugselementen 14, 16 in das Abstreifblech 24 eingebracht ist. Der Anfang (Eintritt) des Pflückkanals liegt bezüglich der Vorwärtsbewegungsrichtung vor der Drehachse der Einzugselemente 14, 16. Der Endbereich des Pflückkanals 26 ist jedoch in Richtung auf die Drehachse der Einzugselemente 14, 16 zu gekrümmt.

Der Stängel der Pflanze 22 gelangt anschließend in den Wirkungsbereich der zweiten Pflückwalze 20, deren vordere Spitze (bezüglich der Vorwärtsbewegungsrichtung V betrachtet) etwa in Höhe der Drehachse der Einzugselemente 14, 16 liegt.

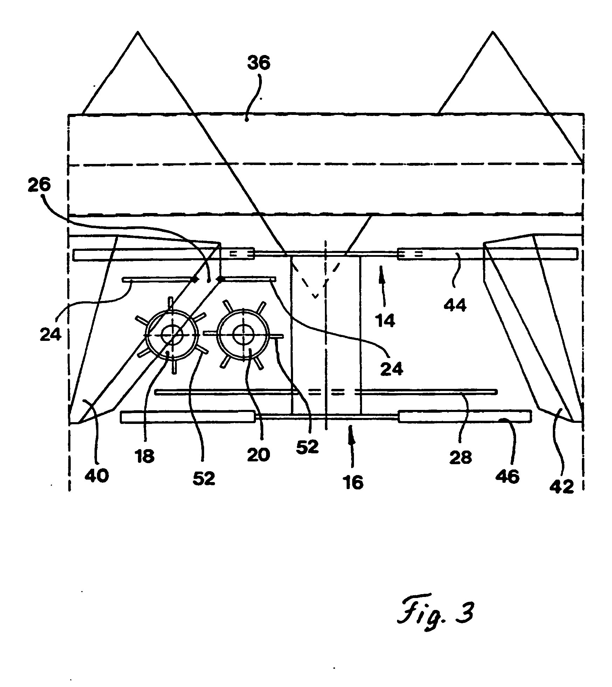

Die zweite Pflückwalze 20 ist parallel zur ersten Pflückwalze 18 orientiert und zwischen letzterer und der Drehachse der Einzugselemente 14, 16 positioniert, wobei der zwischen der ersten Pflückwalze 18 und der zweiten Pflückwalze 20 verbleibende Spalt vertikal unterhalb des Pflückkanals 26 angeordnet ist. Der hintere Bereich 18' der ersten Pflückwalze 18, dessen Länge der Länge der zweiten Pflückwalze 20 entspricht, und die zweite Pflückwalze 20 sind in an sich bekannter Weise mit axial verlaufenden, nach außen überstehenden Mitnehmern 52 versehen, wie sie am besten in Figur 3 erkennbar sind. Bezüglich der Figur 3 rotiert die erste Pflückwalze 18 im Uhrzeigersinn, die zweite Pflückwalze 20 im Gegenuhrzeigersinn. Die erste Pflückwalze 18 und die zweite Pflückwalze 20 wirken zusammen und ziehen den Stängel der Pflanze 22 nach unten ein. Dabei dient das Abstreifblech 24 beidseits des Pflückkanals 26 zum Abstreifen, so dass Nutzteile der Pflanze 22, wie Maiskolben 54 (s. Figur 6), von den Resten der Pflanze 22 getrennt werden.

Während dieses Pflückvorgangs sorgen das obere Einzugselement 14 und das untere Einzugselement 16 dafür, dass die Pflanze 22 über die Länge des Pflückkanals 26 transportiert wird. Der Stängel der Pflanze 22 ist, wie oben beschrieben, anfangs im Zwickel eingeklemmt, den ein Finger 44 des oberen Einzugselements 14 und ein Finger 46 des unteren Einzugselements 16 bilden. Während des Hauptteils des Pflückvorgangs verbleibt die Pflanze 22 in diesem Zwickel. Nachdem ein Häckselmesser 28 (s. unten), das am stromab liegenden Ende des Pflückkanals 26 auf die Pflanze 22 einwirkt, den Stängel schließlich vom Erdboden getrennt hat, und die Pflanze 22 daher nicht mehr mit einem Finger 46 des unteren Einzugselements 16 in Kontakt steht, wird die Pflanze 22 vom jeweils nachfolgenden Finger 44 des oberen Einzugselements 14 durch den Pflückkanal 26 vorangetrieben. Die Drehzahlen der Pflückwalzen 18, 20 und der Einzugselemente 14, 16 sind vorzugsweise derart bemessen, dass die gesamte Pflanze 22 in den Pflückkanal 26 nach unten eingezogen wurde, wenn das Ende des Pflückkanals 26 erreicht ist.

Die abgetrennten Nutzteile werden, durch Einwirkung der Finger 44 des rotierenden oberen Einzugselements 14, und geschoben durch nachfolgende Pflanzen 22, in eine Mulde 38 an der Rückseite der Einzugs- und Pflückeinrichtung 10 verbracht, und gelangen dort in den Wirkungsbereich eines quer zur Vorwärtsbewegungsrichtung V verlaufenden Schneckenförderers 36. Der Schneckenförderer verbringt die Nutzteile in eine an sich bekannte und daher in den Figuren nicht wiedergegebene Maschine, in der sie weiter verarbeitet werden, wie einen Mähdrescher mit einer Drescheinrichtung, oder einen Feldhäcksler mit einer Häckseleinrichtung, oder zu einer Einrichtung, die sie in einem Anhänger oder dergl. zuführt.

Die Reste der Pflanze 22, die von den Pflückwalzen 18, 20 nach unten abtransportiert werden, gelangen in den Wirkungsbereich eines rotierenden vierarmigen Häckselmessers 28 und werden durch dieses in einzelne Stücke zerteilt. Auf dem Feld werden somit gehäckselte Pflanzenreste abgelegt. Dabei wird die Pflanze 22 - zumindest beim ersten Schnitt, der sie vom Erdboden abtrennt - durch das untere Einzugselement 16 abgestützt, das eine Gegenschneide bildet. Aufgrund der hohen Anzahl der Finger 46 des unteren Einzugselements 16 dient letzteres ebenfalls als Gegenschneide. Außerdem halten auch die Pflückwalzen 18, 20 die Pflanze 22 während des Zerteilens fest.

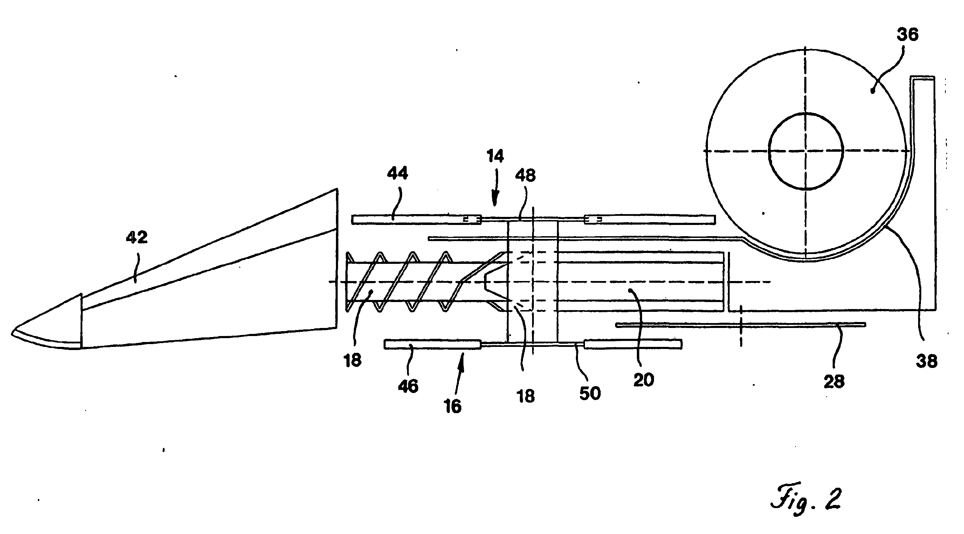

Das Häckselmesser 28 rotiert um eine vertikal verlaufende Drehachse 30, die bezüglich der Vorwärtsbewegungsrichtung V zwischen der Drehachse der Einzugselemente 14, 16 und dem Schneckenförderer 36 angeordnet ist, wie in den Figuren 1 und 2 erkennbar ist. In vertikaler Richtung ist das Häckselmesser 28 zwischen den Pelückwalzen 18, 20 und dem unteren Einzugselement 16 positioniert. Die Drehrichtung des Häckselmessers 28 ist, betrachtet man Figur 1, im Uhrzeigersinn, so dass das gehäckselte Gut seitlich nach hinten geschleudert wird.

Figur 4 zeigt eine Gesamtansicht einer Erntegutbergungsvorrichtung 12 mit insgesamt sechs Einzugs- und Pflückeinrichtungen 10, die denen der Figuren 1 bis 3 entsprechen, mit dem einzigen Unterschied, dass die Länge der Finger 44 des oberen Einzugselements 14 (zumindest etwa) mit der Länge der Finger 46 des unteren Einzugselements 16 übereinstimmt. Alle Pflückkanäle 26 sind bezüglich der Vorwärtsbewegungsrichtung V rechtsseitig der Drehachsen der Einzugselemente 14, 16 angeordnet. Der Schneckenförderer 38 fördert die Nutzteile der Pflanzen 22 in die Richtung der Mittelachse M der Erntegutbergungseinrichtung 12, von wo aus sie zur weiteren Verarbeitung abtransportiert werden. An der Rückseite der Erntegutbergungsvorrichtung 12 kann daher - in der Regel mittig - ein Schrägförderer eines Mähdreschers oder der Einzugsbereich eines Feldhäckslers angeordnet sein. Bei der hier dargestellten Ausführungsform ist als vorteilhaft anzusehen, dass alle Einzugs- und Pflückeinrichtungen 10 gleichartig sind, was niedrige Herstellungskosten ermöglicht.

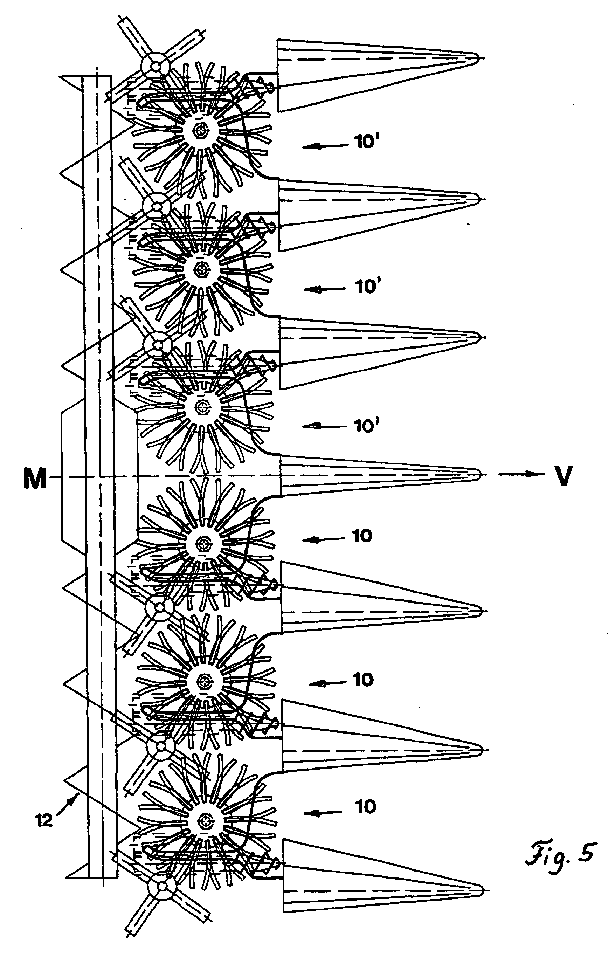

Bei der in Figur 5 wiedergegebenen Ausführungsform finden hingegen zwei unterschiedliche Arten von Einzugs- und Pflückeinrichtungen 10 Verwendung. Bezüglich der Vorwärtsbewegungsrichtung V rechtsseitig der Mittellinie M der Erntegutbergungsvorrichtung 12 sind nebeneinander drei Einzugs- und Pflückeinrichtungen 10 angeordnet, die symmetrisch zu den drei Einzugs- und Pflückeinrichtungen 10' sind, die sich linksseitig der Mittellinie M befinden. Bei den Einzugs- und Pflückeinrichtungen 10' sind der Pflückkanal 26 und die Pflückwalzen 18, 20 (bezüglich der Vorwärtsbewegungsrichtung V) linksseitig der Einzugselemente 14, 16 angeordnet, während die Einzugs- und Pflückeinrichtungen 10 gleichartig mit den in Figur 4 wiedergegebenen sind, der Pflückkanal 26 und die Pflückwalzen 18,20 also rechtsseitig der Einzugselemente 14, 16 liegen. Die Drehrichtung der Einzugselemente 14, 16 ist ebenfalls unterschiedlich: sie verläuft im Uhrzeigersinn bei den Einzugs- und Pflückeinrichtungen 10 und im Gegenuhrzeigersinn bei den Einzugs- und Pflückeinrichtungen 10'. Ein Vorteil der zweiten Ausführungsform ist, dass wegen der symmetrischen Massenverteilung der Einzugs- und Pflückeinrichtungen 10, 10' keine seitlichen Torsionsmomente auf das die Erntegutbergungsvorrichtung 12 halternde Fahrzeug wirken.

Figur 6 zeigt eine perspektivische Ansicht einer Einzugs- und Pflückeinrichtung 10, bei der die Lage des Häckselmessers 28 sich von den vorhergehenden Ausführungsformen unterscheidet. Die vertikal verlaufende Drehachse 30 des Häckselmessers 28 ist auf der den Einzugselementen 14, 16 gegenüberliegenden Seite der ersten Pflückwalze 18 angeordnet. Sie liegt bezüglich der Vorwärtsbewegungsrichtung etwa zwischen dem Schneckenförderer 36 und der Drehachse der Einzugselemente 14, 16. Das Häckselmesser 28 wird mittels eines Getriebes 32 in Drehung gebracht, welches durch eine durchgehende Antriebswelle 34 angetrieben wird. Die Antriebswelle 34 dient auch zum Antrieb der Pflückwalzen 18, 20 und der sich an einem Tragarm 56 abstützenden Einzugselemente 14, 16, wobei die dazwischengeschalteten Kraftübertragungselemente aus Gründen der Übersichtlichkeit nicht wiedergegeben wurden. Es ist denkbar, für eine Erntebergungseinrichtung 12 insgesamt nur eine - durchgehende - Antriebswelle 34 zu verwenden, obwohl es sich meist als zweckmäßig erweist, beidseits der Einzugseinrichtung einer selbstfahrenden Erntemaschine jeweils eine separat von der Erntemaschine angetriebene Antriebswelle vorzusehen. Wie in den Figuren 1 bis 3 ist in Figur 6 der Durchmesser des unteren Einzugselements 16 kleiner als der des oberen Einzugselements 14.

Oberhalb des Abstreifblechs 24 ist eine Abdeckung 60 vorgesehen, die in einem oberhalb des Pflückkanals 26 liegenden Bereich einen Kanal definiert, durch den die Nutzteile der Pflanzen dem Schneckenförderer 36 zugeführt werden. Die Abdeckung 60 schützt außerdem das obere Einzugselement 14 vor unbeabsichtigter Berührung. Die Abdeckung 60 kann auch bei allen anderen Ausführungsformen der Erfindung Verwendung finden.

Die Einzugs- und Pflückeinrichtung 10 ist vorzugsweise seitlich verschiebbar an einem (ebenfalls in der Figuren nicht eingezeichneten) Träger angebracht, der sich über die Breite einer Erntegutbergungsvorrichtung 12 erstreckt. Dazu kann eine Befestigungseinrichtung, die das Getriebe 32, die Pflückwalzen 18, 20, das Abstreifblech 24 mit den Stängelteilern 40, 42 und den Tragarm 56 mit den Einzugselementen 14, 16 haltert, verschiebbar am Träger befestigt sein. Beim Verschieben eventuell entstehende Zwischenräume zwischen Abstreifblechen 24 benachbarter Einzugs- und Pflückeinrichtungen 10 können dabei durch geeignete Bleche odgl. abgedeckt sein. Eine derartige Verschiebbarkeit ist bei allen Ausführungsformen, nicht nur der in Figur 6 dargestellten, denkbar.

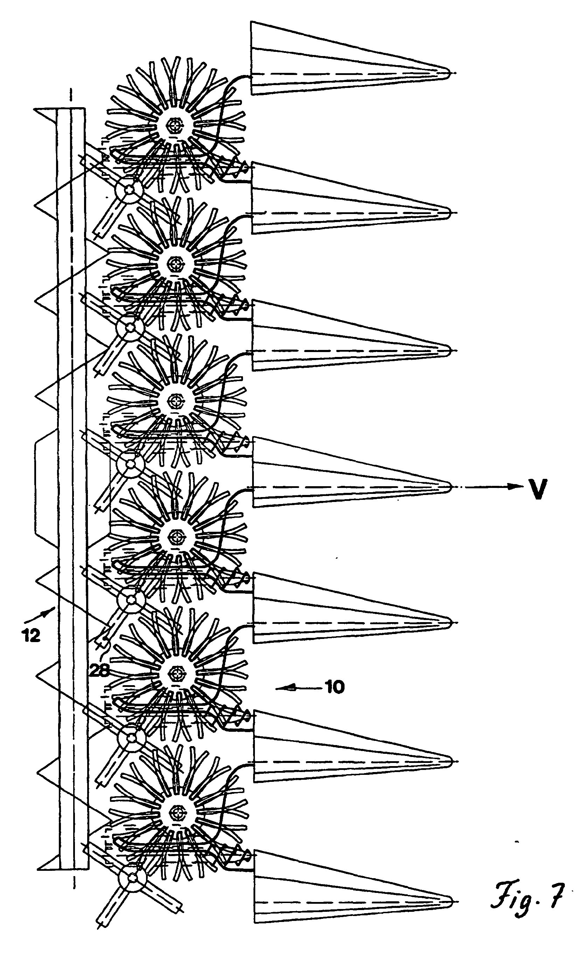

Die in Figur 7 wiedergegebene Erntegutbergungsvorrichtung 12 entspricht im wesentlichen der in Figur 4 gezeigten, jedoch finden Einzugs- und Pflückeinrichtungen 10 gemäß Figur 6 Verwendung. Die Drehachsen 30 der Häckselmesser 28 sind daher nicht hinter den Einzugselementen 14, 16 angeordnet, sondern seitlich neben der ersten Pflückwalze 18. Im Unterschied zur Figur 6 stimmen die Durchmesser der oberen Einzugselemente 14 und der unteren Einzugselemente 16 überein.

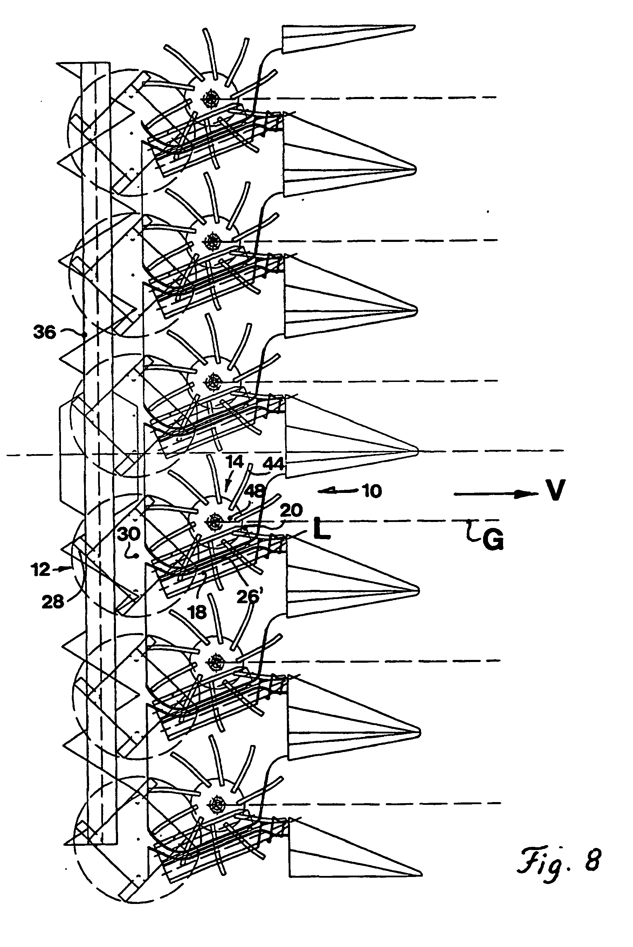

Figur 8 zeigt eine Erntegutbergungsvorrichtung mit sechs Einzugs- und Pflückeinrichtungen 10. Ein wesentlicher Unterschied zu den vorgehend beschriebenen Ausführungsformen besteht darin, dass die Pflückkanäle 26' im Winkel zur Vorwärtsbewegungsrichtung V verlaufen. Auch die erste Pflückwalze 18 und die zweite Pflückwalze 20 schließen mit der Vorwärtsbewegungsrichtung V einen Winkel ein, wobei der zwischen ihnen gebildete Spalt unterhalb des Pflückkanals 26' liegt. Die Längsachse L des Pflückkanals 26' schließt daher mit einer gedachten Geraden G, die parallel zur Vorwärtsfahrtrichtung V und durch die Drehachse des oberen Einzugselements verläuft, einen Winkel ein, wobei der Schnittpunkt der Längsachse L mit der Geraden G vor der Drehachse des oberen Einzugselements liegt. Die Pflanzen 22 werden im Pflückkanal somit sukzessive von der Geraden G fort gefördert. Der abgewinkelte Pflückkanal 26' hat zur Folge, dass die Stängel der Pflanzen 22 nicht nur in Vorwärtsfahrtrichtung, sondern auch in dazu senkrechter, seitlicher Richtung durch ihn hindurch transportiert werden. Die wirksame Länge des Pflückkanals 26' bleibt somit gleich, wobei jedoch die Baulänge der Einzugs- und Pflückeinrichtung 10 verkürzt ist, was zur vorteilhaften Folge hat, dass das Drehmoment, mit dem die Erntegutbergungsvorrichtung 12 das sie halternde Fahrzeug belastet, reduziert ist. Das hintere Ende des ansonsten gerade verlaufenden Pflückkanals 26' ist jedoch wiederum in Richtung auf die Gerade G zu gekrümmt.

Die ebenfalls vierarmigen Häckselmesser 28 haben eine Drehachse 30, die (bezüglich der Vorwärtsbewegungsrichtung V) in der Nähe der vorderen Berandung des Schneckenförderers 36 angeordnet ist. In seitlicher Richtung liegt die Drehachse 30 des Häckselmessers 28 in der Nähe des hinteren Ende des Pflückkanals 26.

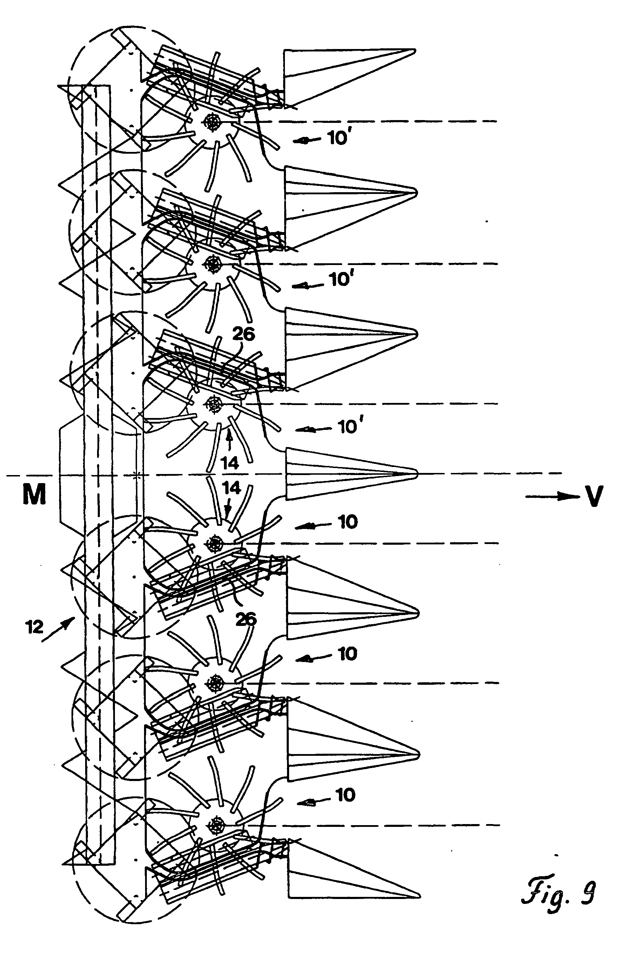

In Figur 8 finden sechs gleichartige Einzugs- und Pflückeinrichtungen 10 Verwendung. Der Vorteil besteht in den günstigen Herstellungskosten. Anzumerken ist, dass in Figur 8 und 9 die unteren Einzugselemente 16 aus Gründen der Übersichtlichkeit nicht mit eingezeichnet wurden.

Die in Figur 9 wiedergegebene Erntegutbergungsvorrichtung 12 weist zwei unterschiedliche Arten von Einzugs- und Pflückeinrichtungen 10 auf. Die drei bezüglich der Vorwärtsbewegungsrichtung V links der Mittellinie M liegenden Einzugs- und Pflückeinrichtungen 10' sind symmetrisch zu den drei rechts der Mittellinie M angeordneten Einzugs- und Pflückeinrichtungen 10. Bei den Einzugs- und Pflückeinrichtungen 10' ist der Pflückkanal 26 links von den oberen Einzugselementen 14 angeordnet, während er bei den Einzugs- und Pflückeinrichtungen 10 rechts von den oberen Einzugselementen 14 liegt. Auch alle anderen Bauelemente der Einzugs- und Pflückeinrichtungen 10 bzw. 10' sind bezüglich der Mittellinie M zueinander symmetrisch. Die Einzugs- und Pflückeinrichtungen 10 entsprechen den in Figur 8 gezeigten. Hier ist die Drehrichtung der Einzugs- und Pflückeinrichtungen 10 im Uhrzeigersinn und somit entgegengesetzt mit den Einzugs- und Pflückeinrichtungen 10', die sich im Gegenuhrzeigersinn drehen. Der Vorteil der symmetrischen Anordnung der Einzugs- und Pflückeinrichtungen liegt, wie bei der in Figur 5 dargestellten Ausführungsform, darin, dass die Massen beidseits der Mittellinie gleichmäßig verteilt sind, so dass kein unerwünschtes Drehmoment auf das die Erntegutbergungsvorrichtung 12 halternde Fahrzeug wirkt.

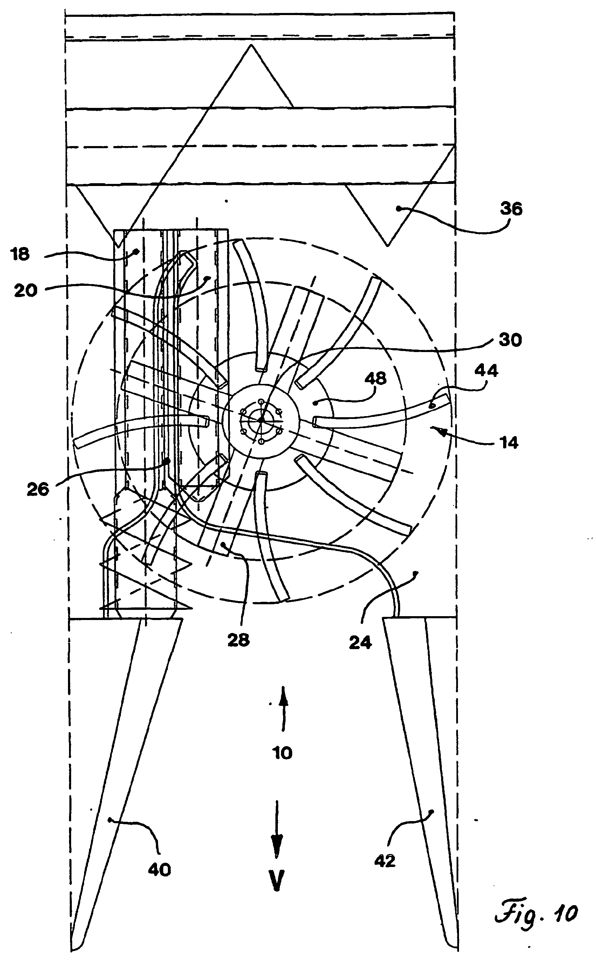

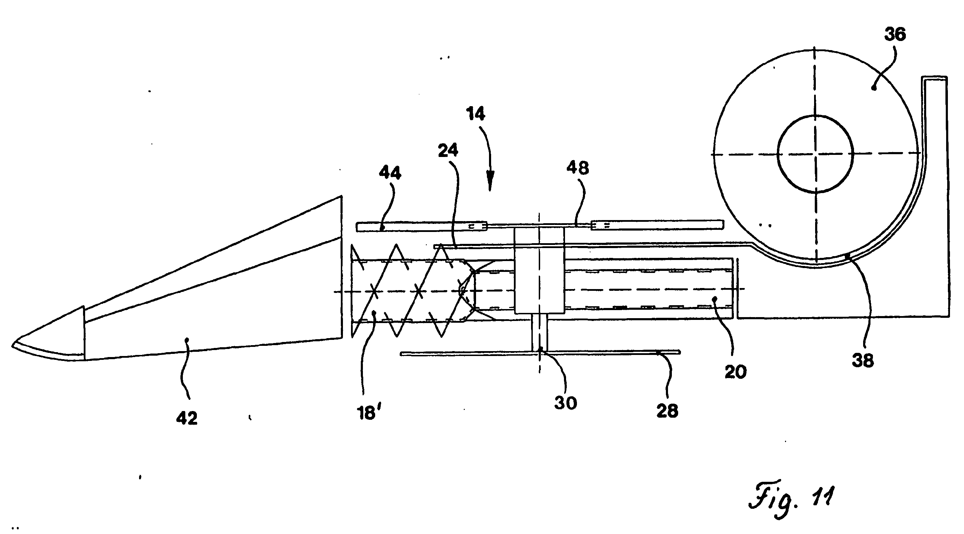

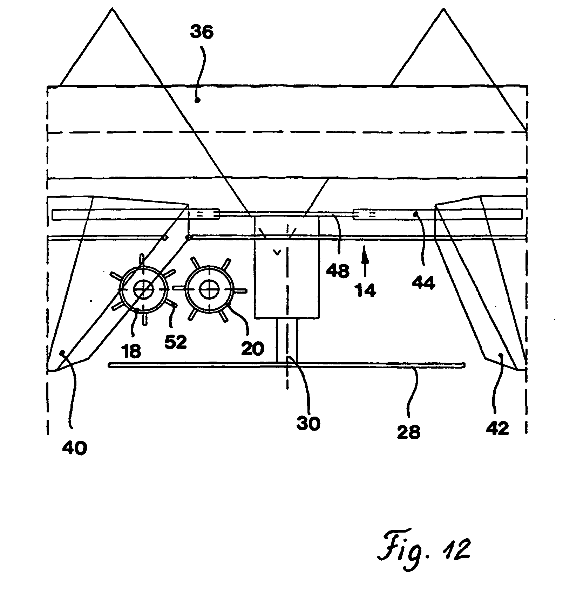

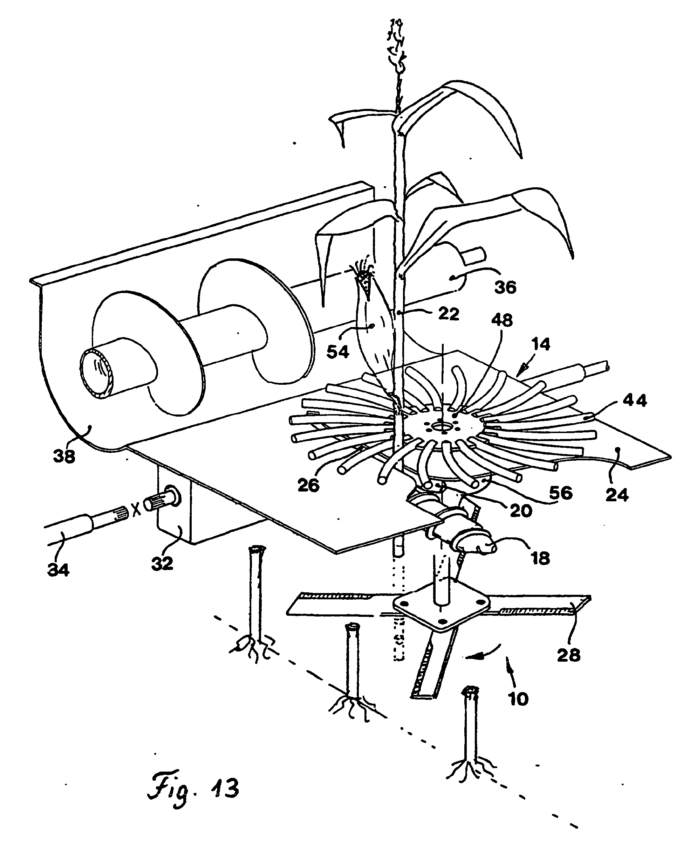

Die in den Figuren 10 bis 13 wiedergegebene Ausführungsform unterscheidet sich von den vorhergehend beschriebenen Ausführungsformen der Einzugs- und Pflückeinrichtung 10 im wesentlichen dadurch, daß an die Stelle des unteren Einzugselement 16 das Häckselmesser 28 getreten ist. Das Häckselmesser 28 ist daher koaxial unterhalb des oberen (nunmehr einzigen) Einzugselements 14 angeordnet. In vertikaler Richtung befindet sich das Häckselmesser, wie man aus Figur 12 erkennt, unterhalb der Pflückwalzen 18, 20.

Die Funktion der Ausführungsform gemäß den Figuren 10 bis 13 ist wie folgt. Das Häckselmesser 28 dreht sich um eine vertikale Achse 30, um die sich auch das Einzugselement 14 dreht. Die Drehzahl des Häckselmessers 28, dessen Durchmesser kleiner als der des Einzugselements 14 ist, ist wesentlich größer als die des Einzugselements 14, ihre Drehrichtungen stimmen aber überein. In Vorwärtsbewegungsrichtung V vor dem Einzugselement 14 stehende Stängel von Pflanzen werden - gegebenenfalls, nachdem sie von den Stängelteilern 40, 42 seitlich verbogen wurden - von dem in Figur 10 im Uhrzeigersinn drehenden Einzugselement 14 berührt. Wegen des abweisenden Förderverhaltens der vorlaufenden Kante der Finger 44 des Einzugselements 14 werden sie nach außen gedrückt, und nicht nach innen eingezogen. Wird die Einzugs- und Fördereinrichtung 10, die Bestandteil einer Erntegutbergungsvorrichtung ist, durch das letztere halternde Erntefahrzeug weiter in Richtung V bewegt, gerät der Stengel der Pflanze in den Wirkungsbereich des Häckselmessers 28, das sie von ihrer im Boden verbleibenden Wurzel abtrennt. Die Pflanze bleibt wegen ihrer Massenträgheit stehen, kippt aber gegen die nachlaufende Kante eines der Finger 44. Letzterer dreht sich in Richtung auf den Pflückkanal 26 zu, so daß die Pflanze zwar leicht gekippt wird, aber abgestützt durch den Finger 44 den Pflückkanal 26 erreicht, und dort vom vorderen Bereich der ersten Pflückwalze 18 erfaßt wird. Die Spitze der zweiten Pflückwalze 20 wirkt als Ausräumer, so daß die Pflanze, wie auch bei den oben erläuterten Ausführungsformen der Erfindung, zwischen den Pflückwalzen 18, 20 hindurchgezogen wird. Ist die Pflanze im Pflückkanal 26, wird sie von der vorlaufenden Kante des nachfolgenden Fingers 44 des Einzugselements 14 über die Länge der Pflückkanals 26 vorangetrieben. Dabei werden Nutzteile, wie Maiskolben 54, am Abstreifblech 24 abgetrennt und durch Einwirkung des Einzugselements 14 der Mulde 38 zugeführt, von wo sie der schneckenförderer 36 zu einem Erntefahrzeug verbringt.

Gleichzeitig wird die Pflanze in ihrem unteren Bereich durch das Häckselmesser 28 zerteilt. Bevor sie den Pflückkanal 26 erreicht hat, fällt sie durch Einwirkung der Schwerkraft sukzessive nach unten, so daß ihre unteren Teile durch das Häckselmesser abgetrennt werden. Ist die Pflanze in den Pflückkanal 26 eingeführt, wird sie durch die Pflückwalzen 18, 20 sukzessive nach unten eingezogen, und wird unterhalb der Pflückwalzen durch das Häckselmesser 28 zerteilt.

Bis auf die unterschiedliche Position und Wirkungsweise des Häckselmessers entspricht die Funktion der in den Figuren 10 bis 13 dargestellten Einzugs- und Pflückeinrichtung also den vorangegangenen Ausführungsbeispielen.

## Patentansprüche

1. Einzugs- und Pflückeinrichtung (10) mit einem reihenunabhängig arbeitenden Einzugselement (14, 16), das sich um eine etwa vertikale Achse dreht, zum Erfassen von Teilen, insbesondere Stängeln, von Pflanzen (22) eingerichtet ist, und die Pflanzen (22) einer Pflückeinrichtung zuführt, die Teile von ihnen abtrennt und mit einer Häckseleinrichtung, die zum Zerteilen der Reste der Pflanze eingerichtet ist und ein Häckselmesser (28) umfasst, welches um eine wenigstens näherungsweise vertikal verlaufende Achse (30) rotiert, **dadurch gekennzeichnet, dass** sich die Wirkungsbereiche des Einzugselements (14, 16) und der Häckseleinrichtung überdecken.

2. Einzugs- und Pflückeinrichtung nach Anspruch 1, **dadurch gekennzeichnet, dass** das Einzugselement (14, 16) eingerichtet ist, als Gegenmesser für die Häckseleinrichtung zu wirken.

3. Einzugs- und Pflückeinrichtung nach Anspruch 1 oder 2, **dadurch gekennzeichnet, dass** der Wirkungsbereich der Häckseleinrichtung (28) sich über die Länge der Pflückeinrichtung erstreckt.

4. Einzugs- und Pflückeinrichtung nach einem der Ansprüche 1 bis 3, **dadurch gekennzeichnet, dass** sich der Wirkungsbereich der Häckseleinrichtung auf einen vor der Pflückeinrichtung liegenden Bereich erstreckt.

5. Einzugs- und Pflückeinrichtung (10) nach einem der vorhergehenden Ansprüche, **dadurch gekennzeichnet, dass** die Häckseleinrichtung zumindest näherungsweise koaxial mit einem Einzugselement (14) der Einzugseinrichtung angeordnet ist.

6. Einzugs- und Pflückeinrichtung (10) nach Anspruch 1 oder 2, **dadurch gekennzeichnet, dass** die Häckseleinrichtung am hinteren Ende der Pflückeinrichtung angeordnet ist.

7. Einzugs- und Pflückeinrichtung (10) nach einem der Ansprüche 1 bis 6, **gekennzeichnet durch** ein oberes Einzugselement (14), das oberhalb der Pflückeinrichtung angeordnet ist.

8. Einzugs- und Pflückeinrichtung nach einem der Ansprüche 1 bis 7, **gekennzeichnet durch** ein unteres Einzugselement (16), das unterhalb der Häckseleinrichtung angeordnet ist.

9. Einzugs- und Pflückeinrichtung (10) nach einem der vorhergehenden Ansprüche, **dadurch gekennzeichnet, dass** die Häckseleinrichtung wenigstens ein Häckselmesser (28) umfaßt, das oberhalb oder unterhalb eines Einzugselements (14, 16) der Einzugseinrichtung angeordnet ist, oder zwei Häckselmesser (28), von denen eines unterhalb und eines oberhalb eines Einzugselements (14, 16) der Einzugseinrichtung angeordnet ist.

10. Einzugs- und Pflückeinrichtung (10) nach einem der vorhergehenden Ansprüche, **dadurch gekennzeichnet, dass** das untere Einzugselement (16) und/oder das obere Einzugselement (14) eingerichtet ist, erfaßte Pflanzen (22) über die Länge der Pflückeinrichtung zu transportieren.

11. Einzugs- und Pflückeinrichtung (10) nach einem der vorhergehenden Ansprüche, **dadurch gekennzeichnet, dass** das obere Einzugselement (14) eine vorlaufende Oberfläche mit abweisendem Förderverhalten und eine nachlaufende Oberfläche mit aggressivem Förderverhalten hat.

12. Einzugs- und Pflückeinrichtung (10) nach einem der vorhergehenden Ansprüche, **dadurch gekennzeichnet, dass** sich das Häckselmesser (28) der Häckseleinrichtung gleichsinnig oder entgegengesetzt mit dem Einzugselement (14, 16) dreht.

13. Einzugs- und Pflückeinrichtung (10) nach einem der vorhergehenden Ansprüche, **gekennzeichnet durch** eine Führung für gehäckseltes Material als Schwader.

14. Erntegutbergungsvorrichtung (12) mit einer Einzugs- und Pflückeinrichtung (10) nach einem der vorhergehenden Ansprüche.

## Claims

1. Feeding and picking device (10) comprising:
- a feeding element (14, 16), which operates independently of rows and rotates about a roughly vertical axis, is designed to grasp parts of plants (22), especially stalks, and feeds the plants (22) to a picking device which separates parts from them, and
- a chopping device which is designed to chop up the remains of the plant and includes a chopping knife (28) which rotates about an axis (30) extending at least approximately vertically,
**characterised in that** the feeding radius of the feeding element (14, 16) and the chopping radius of the chopping device overlap.

2. Feeding and picking device according to claim 1, **characterised in that** the feeding element (14, 16) is designed to act as a counter-knife for the chopping device.

3. Feeding and picking device according to claim 1 or 2, **characterised in that** the chopping radius of the chopping device (28) extends over the length of the picking device.

4. Feeding and picking device according to one of claims 1 to 3, **characterised in that** the chopping radius of the chopping device extends to an area lying upstream of the picking device.

5. Feeding and picking device (10) according to one of the preceding claims, **characterised in that** the chopping device is arranged at least approximately coaxial with one feeding element (14) of the feeding device.

6. Feeding and picking device (10) according to claim 1 or 2, **characterised in that** the chopping device is arranged at the rear end of the picking device.

7. Feeding and picking device (10) according to one of claims 1 to 6, **characterised by** an upper feeding element (14) which is arranged above the picking device.

8. Feeding and picking device according to one of claims 1 to 7, **characterised by** a lower feeding element (16) which is arranged below the chopping device.

9. Feeding and picking device (10) according to one of the preceding claims, **characterised in that** the chopping device includes at least one chopping knife (28) which is arranged above or below a feeding element (14, 16) of the feeding device, or two chopping knives (28), one of which is arranged below and one above a feeding element (14, 16) of the feeding device.

10. Feeding and picking device (10) according to one of the preceding claims, **characterised in that** the lower feeding element (16) and/or the upper feeding element (14) are/is designed to transport grasped plants (22) over the length of the picking device.

11. Feeding and picking device (10) according to one of the preceding claims, **characterised in that** the upper feeding element (14) has a leading surface with a rejecting transporting action and a trailing surface with an aggressive transporting action.

12. Feeding and picking device (10) according to one of the preceding claims, **characterised in that** the chopping knife (28) of the chopping device rotates in the same direction as, or in the opposite direction from, the feeding element (14, 16).

13. Feeding and picking device (10) according to one of the preceding claims, **characterised by** a guiding mechanism for chopped material in the form of a windrow.

14. Crop harvesting machine (12) which has a feeding and picking device (10) according to one of the preceding claims.

## Revendications

1. Dispositif d'introduction et de cueillage (10) avec un élément d'introduction (14, 16) fonctionnant indépendamment de la rangée qui tourne autour d'un axe à peu près vertical, qui est conçu pour la saisie de parties, en particulier de tiges, de plantes (22) et qui amène les plantes (22) à un dispositif de cueillage, qui sépare des parties de celles-ci, et qui est équipé d'un dispositif de hachage qui est conçu pour détacher les restes de la plante et qui comprend un couteau de hachoir (28) qui tourne autour d'un axe s'étendant au moins approximativement verticalement (30), **caractérisé en ce que** les zones actives de l'élément d'introduction (14, 16) et du dispositif de hachage se recouvrent.

2. Dispositif d'introduction et de cueillage (10) selon la revendication 1, **caractérisé en ce que** l'élément d'introduction (14, 16) est conçu pour fonctionner comme couteau antagoniste pour le dispositif de hachage.

3. Dispositif d'introduction et de cueillage (10) selon la revendication 1 ou 2, **caractérisé en ce que** la zone active du dispositif de hachage (28) s'étend sur la longueur du dispositif de cueillage.

4. Dispositif d'introduction et de cueillage (10) selon l'une quelconque des revendications 1 à 3, **caractérisé en ce que** la zone active du dispositif de hachage s'étend sur une zone se trouvant devant le dispositif de cueillage.

5. Dispositif d'introduction et de cueillage (10) selon l'une quelconque des revendications précédentes, **caractérisé en ce que** le dispositif de hachage est disposé au moins approximativement coaxialement par rapport à un élément d'introduction (14) du dispositif d'introduction.

6. Dispositif d'introduction et de cueillage (10) selon la revendication 1 ou 2, **caractérisé en ce que** le dispositif de hachage est disposé à l'extrémité arrière du dispositif de cueillage.

7. Dispositif d'introduction et de cueillage (10) selon l'une quelconque des revendications 1 à 6, **caractérisé par** un élément d'introduction supérieur (14) qui est disposé au dessus du dispositif de cueillage.

8. Dispositif d'introduction et de cueillage (10) selon l'une quelconque des revendications 1 à 7, **caractérisé par** un élément d'introduction inférieur (16) qui est disposé en dessous du dispositif de hachage.

9. Dispositif d'introduction et de cueillage (10) selon l'une quelconque des revendications précédentes, **caractérisé en ce que** le dispositif de hachage comporte au moins un couteau de hachoir (28) qui est disposé au dessus ou en dessous d'un élément d'introduction (14, 16) du dispositif d'introduction, ou deux couteaux de hachoir (28) dont l'un est disposé en dessous et l'autre est disposé au dessus d'un élément d'introduction (14, 16) du dispositif d'introduction.

10. Dispositif d'introduction et de cueillage (10) selon l'une quelconque des revendications précédentes, **caractérisé en ce que** l'élément d'introduction inférieur (16) et/ou l'élément d'introduction supérieur (14) est conçu pour transporter les plantes prises (22) sur la longueur du dispositif de cueillage.

11. Dispositif d'introduction et de cueillage (10) selon l'une quelconque des revendications précédentes, **caractérisé en ce que** l'élément d'introduction supérieur (14) comporte une surface d'amorce avec une fonction de transport de renvoi et une surface de traîne avec une fonction de transport agressive.

12. Dispositif d'introduction et de cueillage (10) selon l'une quelconque des revendications précédentes, **caractérisé en ce que** le couteau de hachoir (28) du dispositif de hachage tourne dans le même sens ou dans le sens inverse de l'élément d'introduction (14, 16).

13. Dispositif d'introduction et de cueillage (10) selon l'une quelconque des revendications précédentes, **caractérisé par** un guide pour produits hachés sous forme d'andaineur.

14. Dispositif de récupération de produits de récolte (12) avec un dispositif d'introduction et de cueillage (10) selon l'une quelconque des revendications précédentes.
